# FASCICULE DE BREVET EUROPEEN

(11) **EP 2 561 300 B1**
(45) Date de publication et mention de la délivrance du brevet: **15.03.2017**
(21) Numéro de dépôt: 11721652.3
(22) Date de dépôt: 20.04.2011
(51) Int. Cl.: F28D 21/00

(54) **PROCÉDÉ POUR EXTRAIRE DE LA CHALEUR D'UN EFFLUENT CIRCULANT DANS UNE CONDUITE, ÉCHANGEUR DE CHALEUR ET INSTALLATION METTANT EN OEUVRE UN TEL PROCÉDÉ**
VERFAHREN UM WÄRME AUS IN EINEM KANAL FLIESSENDEN ABWASSER ZU ENTZIEHEN, WÄRMETAUSCHER UND EINRICHTUNG ZUR DURCHFÜHRUNG DES VERFAHRENS
METHOD FOR EXTRACTING HEAT FROM AN EFFLUENT FLOWING IN A DUCT, HEAT EXCHANGER AND SYSTEM FOR CARRYING OUT SUCH A METHOD

(30) Priorité: 21.04.2010 FR 1053044
(43) Date de publication de la demande: 27.02.2013
(73) Titulaire: Suez Eau France, 92040 Paris la Défense CEDEX (FR)
(72) Inventeur: DUONG, Frédéric, F-66370 Pezilla La Riviere (FR)
(74) Mandataire: Cabinet Armengaud Aîné
(86) Numéro de dépôt international: PCT/IB2011/051720
(87) Numéro de publication internationale: WO 2011/132156

(56) Documents cités:
- EP-A2- 1 215 460
- DE-A1- 3 521 585
- DE-A1- 3 607 207
- DE-U1-202004 005 768
- DE-U1-202004 013 152
- DE-U1-202004 018 084

## Description

L'invention est relative à un procédé pour extraire de la chaleur d'un effluent circulant dans une conduite, en particulier pour extraire de la chaleur d'un collecteur d'eaux usées, procédé selon lequel on installe, au moins dans le fond de la conduite, un échangeur de chaleur qui baigne dans l'effluent.

Les collecteurs ou conduites d'évacuation d'eaux usées transportent des eaux sales qui sont tièdes ou tempérées du fait de leur provenance résidentielle ou tertiaire, ou de leur provenance d'activités collectives ou industrielles : abattoirs, infrastructures sportives et de loisirs, piscines, gymnases, etc.

La chaleur sensible de ces eaux représente un source d'énergie qui peut être avantageusement récupérée pour des besoins de chauffage de bâtiments, de production d'eau chaude sanitaire, ou toute autre utilisation thermique, en combinaison avec une pompe à chaleur.

DE 197 19 311 C5 montre un échangeur de chaleur permettant de mettre en oeuvre un procédé pour extraire de la chaleur d'un effluent. Les éléments de l'échangeur de chaleur peuvent être en forme de plaques métalliques épousant le fond de la conduite ou en forme de profilés métalliques en U qui sont reliés à des canalisations d'arrivée et de départ de fluide caloporteur. Les échangeurs de chaleur sont réalisés essentiellement en pièces métalliques, notamment en acier inoxydable. De tels échangeurs sont relativement coûteux en fabrication et en mise en oeuvre. Ces échangeurs de contact ont leur surface placée parallèlement au flux de l'effluent circulant dans la conduite. Il n'y a pas d'obstacle sur le parcours de l'effluent et le risque de colmatage de la surface de l'échangeur est réduit. Toutefois, un dépôt rémanent peut se produire localement entre les sections.

Ce mode d'échange de chaleur avec un effluent circulant dans une conduite nécessite une longueur développée de contact relativement importante du fait de la surface en contact relativement faible, et de la température relativement basse de l'effluent.

L'échangeur de chaleur constitue un équipement rapporté à l'intérieur des conduites ; même si ces conduites sont de grandes dimensions, l'installation est compliquée du fait des connexions hydrauliques qui doivent être impérativement étanches et de la forme des pièces de l'échangeur qui doivent s'adapter au profil intérieur des conduites.

EP 1215460 A2 divulgue un procédé et un échangeur pour extraire de la chaleur d'un effluent dans une conduite tels que définis par les caractéristiques des préambules des revendications indépendantes.

L'invention a pour but, surtout, de fournir un procédé permettant d'extraire efficacement de la chaleur d'un effluent circulant dans une conduite, notamment un collecteur d'eaux usées, dont la mise en oeuvre soit rapide, simple et économique. Il est souhaitable que les installations pour la mise en oeuvre du procédé ne nécessitent qu'un entretien réduit, pour une durée de vie améliorée

Selon l'invention, un procédé pour extraire de la chaleur d'un effluent circulant dans une conduite, notamment un collecteur d'eaux usées, selon lequel on installe, au moins dans le fond de la conduite, un échangeur de chaleur qui baigne dans l'effluent, l'échangeur de chaleur étant formé par enrobage de tubes avec un matériau suffisamment conducteur de la chaleur coulé autour des tubes, et propre à durcir in situ, les tubes étant destinés à la circulation d'un fluide caloporteur, l'échange calorifique avec l'effluent de la conduite s'effectuant au travers de l'enrobage moulé, la surface supérieure du matériau coulé venant directement au contact de l'effluent circulant dans la conduite, est caractérisé en ce que l'enrobage est réalisé selon plusieurs couches de matériaux de propriétés différentes, à savoir :
- une couche de matériau thermiquement isolant entre les tubes et la paroi de la conduite,
- une couche de matériau thermiquement conducteur au contact des tubes, entre les tubes et l'effluent,
- et, en surface, au contact de l'effluent une couche de matériau résistant à l'abrasion.

Avantageusement, après avoir dévié ou arrêté momentanément l'écoulement d'effluent de la conduite, on réalise l'échangeur directement à l'intérieur de la conduite
- en disposant, dans le fond de la conduite, des tubes pour un circuit de fluide caloporteur,
- et en coulant en place le matériau d'enrobage pour y noyer les tubes, le matériau épousant le profil de la partie inférieure de la conduite.

Le matériau d'enrobage peut être constitué par au moins l'un des matériaux suivants : résine synthétique, ciment ou béton thermiquement conducteur, matériau composite chargé d'ajouts ou d'adjuvants thermiquement conducteurs.

On peut insérer un film de protection entre la surface intérieure de la conduite et l'échangeur intégré dans cette conduite.

De préférence, les tubes sont disposés parallèles à la direction longitudinale de la conduite. Les tubes, avant coulage du matériau d'enrobage, peuvent être maintenus parallèles et espacés par un râtelier.

Une résille intermédiaire, métallique ou en fibres synthétiques, peut être déployée avant coulage du matériau d'enrobage sur au moins une partie d'une nappe de tubes afin de renforcer la résistance mécanique et/ou améliorer le transfert thermique.

Avantageusement, les tubes sont souples ou semi-rigides pour pouvoir être enroulés et déroulés en continu suivant une longueur importante, notamment de plusieurs dizaines de mètres. Les tubes peuvent être en matériau métallique souple ou en matériau synthétique (polypropylène, plastique). Il est possible de réaliser par préfabrication des nappes de tubes souples et de les enrouler sur des supports en forme de bobines pour la mise en place ultérieure dans la conduite d'effluent, par déroulement à partir de la bobine.

On peut disposer des tubes pour fluide caloporteur suivant le contour complet de la section transversale de la conduite, et un enrobage des tubes est réalisé sur tout le contour de la section de la conduite.

La surface intérieure du matériau moulé peut être horizontale, ou en arc de courbe concave vers l'intérieur.

L'invention est également relative à un échangeur pour extraire de la chaleur à partir d'un effluent circulant dans une conduite, notamment un collecteur d'eaux usées, prévu pour être installé au moins dans le fond de la conduite et pour baigner dans l'effluent, caractérisé en ce qu'il est constitué de tubes noyés dans un matériau suffisamment conducteur de la chaleur coulé autour des tubes qui sont destinés à la circulation d'un fluide caloporteur,
l'échange calorifique avec l'effluent de la conduite s'effectuant au travers de l'enrobage moulé, à l'exclusion de toute pièce mécanique rapportée, la surface supérieure du matériau coulé venant directement au contact de l'effluent circulant dans la conduite,
l'échangeur étant réalisé suivant un procédé tel que défini précédemment.

L'échangeur de chaleur baignant dans l'effluent comporte au moins cinq tubes parallèles, selon une répartition angulaire régulière.

L'invention est également relative à une installation pour extraire de la chaleur dans une conduite d'effluent, notamment dans un collecteur d'eaux usées, caractérisée en ce qu'elle comporte dans le fond, baignant dans l'effluent, au moins un échangeur de chaleur réalisé selon le procédé défini précédemment.

L'installation peut comporter, sur les zones de la paroi interne de la conduite situées au-dessus de l'effluent, des canalisations exposées à l'atmosphère régnant dans la conduite, parcourues par un fluide caloporteur pour récupérer une partie de la chaleur sensible et de la chaleur latente de condensation de la vapeur d'eau.

L'invention consiste ainsi à réaliser directement à l'intérieur de la conduite un échangeur monobloc à contact superficiel, à flux parallèles, constitué de tubes qui sont noyés dans un matériau coulé en place, qui épouse le profil de la partie inférieure de la conduite.

L'échange calorifique se produit au travers de la paroi moulée et non par l'intermédiaire d'une pièce mécanique chaudronnée rapportée.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une coupe verticale transversale d'une conduite d'eaux usées dans laquelle est installé en partie basse un échangeur de chaleur selon l'invention.
Fig. 2 est une coupe transversale verticale partielle, à plus grande échelle, d'une variante de réalisation d'un échangeur selon l'invention.
Fig. 3 est une coupe verticale transversale d'une nappe de tubes parallèles, surmontée d'une résille, pour la réalisation d'un échangeur selon l'invention.
Fig. 4 est une coupe verticale transversale, semblable à Fig. 1, d'une conduite avec rainure en partie inférieure pour recevoir l'échangeur moulé.
Fig. 5 est une coupe verticale transversale, à plus petite échelle, semblable à Fig. 4, montrant un échangeur en forme de ménisque.
Fig. 6 est une coupe verticale transversale semblable à Fig. 5 avec des tubes d'échangeur répartis suivant toute la périphérie de la section intérieure de la conduite, avec paroi moulée sur toute cette périphérie.
Fig. 7 est un schéma en coupe transversale, à plus grande échelle, de deux nappes de tubes et de supports en forme d'étrier, en position ouverte pour une nappe, et fermée pour l'autre nappe.
Fig. 8 est une vue partielle d'un tube annelé qui peut servir pour l'échangeur.
Fig. 9 est une coupe transversale d'une installation avec échangeur en partie basse et canalisations de fluide caloporteur en partie haute, et
Fig.10-12 sont des coupes transversales de différents profils de canalisations de fluide caloporteur avec ailettes.

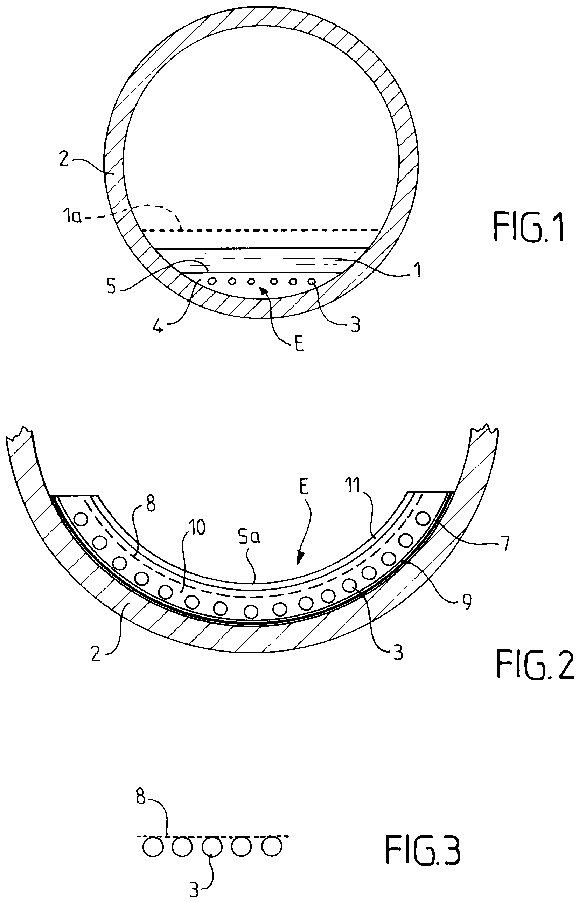

En se reportant aux dessins, notamment à Fig. 1, on peut voir que, pour extraire de la chaleur d'un effluent 1 circulant dans une conduite 2, plus particulièrement un collecteur d'eaux usées, on installe, au moins dans le fond de la conduite, un échangeur de chaleur E qui baigne dans l'effluent 1. Le niveau maximum présumé 1a de l'effluent est représenté par une ligne en tirets.

Cet échangeur E est constitué de tubes souples ou semi-rigides 3, essentiellement parallèles à la direction longitudinale de la conduite. Les tubes 3 sont placés en nappes et sont enrobés avec un matériau 4 suffisamment conducteur de la chaleur coulé autour des tubes et propre à durcir. Les tubes 3 sont destinés à la circulation d'un fluide caloporteur, et l'échange calorifique avec l'effluent 1 de la conduite s'effectue au travers de l'enrobage moulé, à l'exclusion de toute pièce mécanique rapportée. La surface supérieure 5 du matériau coulé vient directement au contact de l'effluent 1 circulant dans la conduite.

Le matériau d'enrobage 4 peut être constitué par une résine synthétique, ou par un ciment ou un béton thermiquement conducteur, ou par un matériau composite, éventuellement chargé d'ajouts ou d'adjuvants thermiquement conducteurs.

Les ciments ou briques conducteurs à base de carbure de silicium, utilisés dans les fours, sont relativement coûteux. Des ciments chargés en acier ferritique au carbone ou en aiguilles métalliques sont bien adaptés à la réalisation de l'échangeur selon l'invention.

Le matériau d'enrobage 4, en particulier un ciment chargé, est notamment choisi pour présenter une conductivité thermique supérieure à 5W/m.°K.

Avantageusement, des thermocouples sont insérés dans les nappes du matériau d'enrobage 4 pour le contrôle des échanges calorifiques et de la circulation du fluide caloporteur.

Le raccordement hydraulique entre les différents tubes 3 dépendra du débit de fluide caloporteur. Les tubes 3, disposés géométriquement en parallèle, peuvent être reliés hydrauliquement soit en série soit en parallèle.

De préférence, l'échangeur E est réalisé directement à l'intérieur de la conduite 2, en disposant, dans le fond de la conduite, les tubes 3 et en coulant en place le matériau d'enrobage 4 pour y noyer les tubes, le matériau épousant le profil de la partie inférieure de la conduite. Préalablement à ces opérations, l'écoulement d'effluent dans la conduite 1 est dévié ou arrêté momentanément. En variante, l'échangeur E peut être préfabriqué ; dans ce cas sa longueur est limitée par les conditions d'introduction dans la conduite.

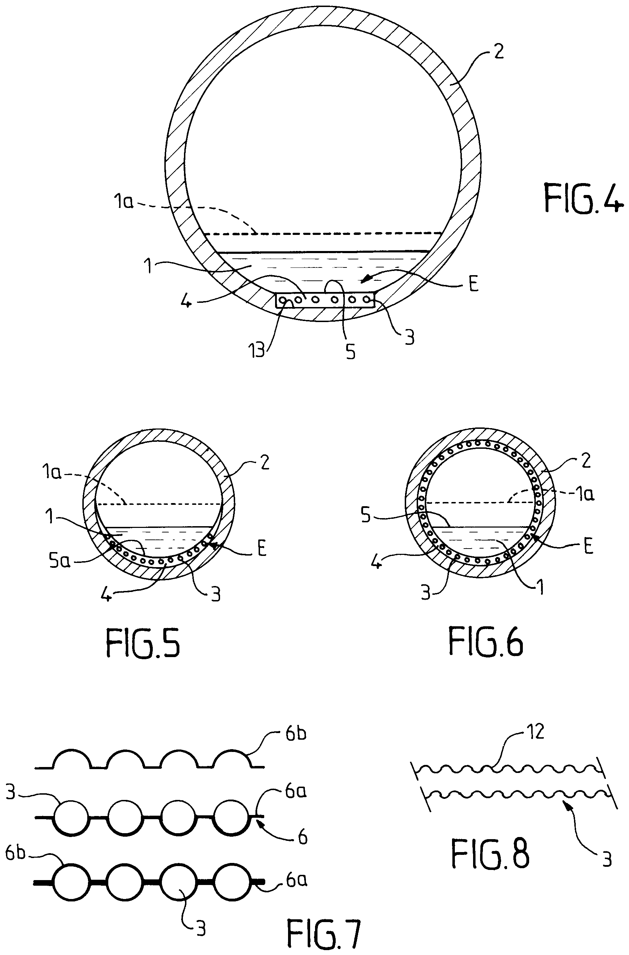

Les tubes 3 peuvent être préalablement fixés sur un râtelier 6 (Fig.7) formé de deux demi-coquilles 6a, 6b qui sont assemblées pour emprisonner les tubes 3 selon un espacement régulier (Fig. 7), de manière à maintenir l'écartement entre chaque tube. Les tubes peuvent être fixés par des clips contre la surface interne de la paroi de la conduite 1.

Après mise en place de la nappe de tubes 3 dans la conduite, le matériau d'enrobage 4 est coulé autour des tubes et durcit sur place afin de maintenir et protéger la nappe de tubes 3. Le matériau d'enrobage 4 forme une paroi d'échange lisse 5 entre l'effluent 2 et le fluide caloporteur qui parcourt chaque tube.

Un film de protection 7 (Fig.2), notamment une feuille de matière plastique, peut être prévu entre la surface intérieure de la conduite 2 et l'échangeur E intégré dans cette conduite.

Une résille intermédiaire 8, notamment métallique ou en fibres synthétiques, est avantageusement déployée (Fig. 2 et 3), avant coulage du matériau d'enrobage, sur au moins une partie d'une nappe de tubes 3 afin de renforcer la résistance mécanique et/ou d'améliorer le transfert thermique lorsque cette résille présente une propriété de conduction thermique, en particulier lorsque cette résille est métallique.

L'enrobage des tubes 3 peut être réalisé selon plusieurs couches de matériaux de propriétés différentes à savoir :
- une couche 9 d'un matériau thermiquement isolant (Fig. 2) entre les tubes 3 et la paroi de la conduite 2, ou le film 7 lorsqu'un tel film est prévu ;
- une couche d'un matériau thermiquement conducteur 10 au contact des tubes, entre les tubes et l'effluent et,
- en surface, une couche 11 de matériau résistant à l'érosion.

Les tubes 3 souples ou semi-rigides sont avantageusement choisis pour pouvoir être enroulés sur une bobine, et déroulés suivant une longueur importante, notamment de plusieurs dizaines de mètres. On peut ainsi réaliser un échangeur E, suivant le flux d'écoulement de l'effluent, dont la longueur est suffisante pour permettre d'obtenir l'efficacité souhaitée, bien que l'enrobage de matériau 4 présente généralement une conductivité thermique inférieure à celle des métaux.

Les tubes 3 peuvent être en matériaux métalliques souples (cuivre, aluminium) ou en matériaux synthétiques (polypropylène, matière plastique souple).

Le profil des tubes peut être lisse ou annelé comme illustré par le profil 12 sur Fig. 8. Le profil annelé permet d'augmenter la surface d'échange en contact avec l'enrobage et d'assurer une certaine compensation de dilatation différentielle entre les tubes 3 et le matériau 4 d'enrobage rigide.

Le nombre de tubes 3 présents dans un échangeur E est de préférence au moins égal à cinq, ces tubes étant régulièrement espacés.

La section transversale des tubes 3 peut être circulaire ou ovoïde selon le mode de fabrication et les matériaux utilisés.

Des nappes de tubes souples 3 peuvent être préfabriquées et enroulées sur des supports en forme de bobines pour leur mise en place ultérieure dans la conduite 1, par déroulement à partir de la bobine.

Une préfabrication en usine de panneaux d'échangeurs, fixés par collage sur un support en grille ou sur un film souple, est également possible.

Selon Fig. 4, la conduite 2 comporte, en partie inférieure, une rainure 13 dans laquelle est installé l'échangeur E obtenu par coulage du matériau 4 autour des tubes 3. La rainure 13, par exemple de section transversale rectangulaire, est comblée par l'échangeur E dont la surface supérieure 5 reste horizontale.

Selon les exemples de Fig. 2 et 5, les tubes 3 sont répartis suivant un arc de la section de la conduite 2 et la surface intérieure 5a du matériau moulé est en arc de cercle concave vers l'intérieur.

Selon la réalisation de Fig. 6, les tubes 3 sont disposés suivant le contour complet de la section transversale de la conduite, selon une circonférence dans l'exemple représenté, et l'enrobage est également prévu tout autour de la surface intérieure de la conduite, de sorte qu'une partie de l'échangeur E est située au-dessus de l'effluent. Cette partie supérieure échange de la chaleur avec l'atmosphère interne de la conduite 1.

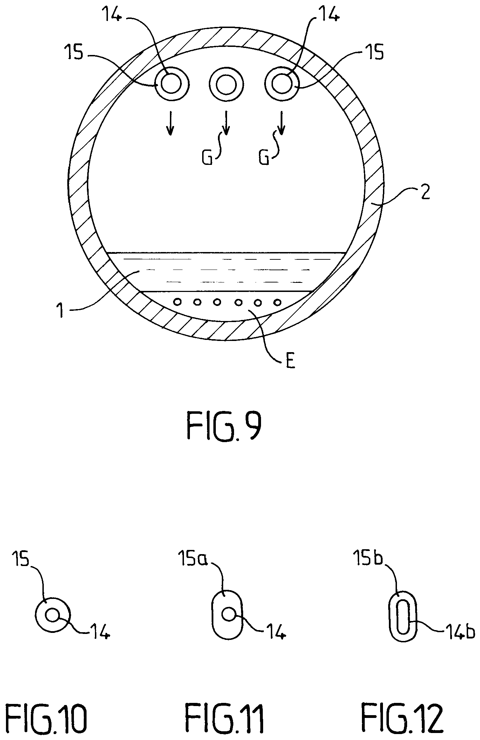

Selon l'exemple de réalisation de Fig.9, l'installation pour extraire de la chaleur de l'effluent 1 comporte, en plus de l'échangeur E qui baigne dans l'effluent, des tubes d'échanges calorifiques 14, disposés en nappe, placés à l'intérieur et en partie supérieure de la conduite 2, en dehors de la zone de circulation de l'effluent liquide 1. Les tubes 14 sont fixés sur des zones de la paroi interne de la conduite situées au-dessus de l'effluent et sont exposés à l'atmosphère régnant dans la conduite 2. Les tubes 14 sont parcourus par un fluide caloporteur pour récupérer une partie de la chaleur sensible et de la chaleur latente de condensation de la vapeur d'eau provenant de l'effluent. Les gouttes d'eau condensée, se formant sur les tubes, tombent dans l'effluent comme illustré par des flèches G.

Les tubes 14 sont orientés parallèlement à la direction longitudinale de la conduite, et sont reliés en parallèle ou en série pour former un circuit de fluide comportant généralement une pompe à chaleur. Ce circuit de fluide est avantageusement le même que celui de l'échangeur E.

Les tubes 14 peuvent être lisses extérieurement, ou comporter des ailettes rapportées pour augmenter la surface d'échange. Les ailettes peuvent être spiralées, longitudinales, transversales, notamment dans un plan orthogonal à l'axe du tube, ou annelées. Selon Fig.9 et 10, les tubes 14 sont de section circulaire, et comportent des ailettes 15 en forme de couronnes circulaires. Selon Fig.11, le tube 14 est de section circulaire, avec ailettes oblongues 15a. Selon Fig.12, le tube 14b est de section oblongue, avec ailettes oblongues 15b.

Les tubes 14 peuvent être métalliques, ou en matière synthétique ou plastique. Ils peuvent être rigides, semi-rigides ou souples. Avantageusement les tubes 14 sont propres à être enroulés sur une bobine de sorte que l'on peut mettre en place des longueurs importantes, notamment de plusieurs dizaines de mètres, d'un seul tenant, sans raccords.

La mise en place de l'échangeur de chaleur E à l'intérieur d'une conduite 1 présente de nombreux avantages.

L'échangeur s'adapte à tous les profils de conduite, ovoïdes, curvilignes et rectangulaires, et sa longueur n'est pas limitée lorsqu'il est coulé en place.

Les tubes utilisés sont des tubes courants, peu coûteux, et ne nécessitent pas la fabrication de pièces spéciales mécaniques et chaudronnées.

Le poids des composants est relativement faible de sorte qu'ils peuvent être introduits sans moyens de manutention, à l'intérieur de la conduite 2.

L'échangeur présente une continuité sur sa longueur, avec risque de fuite limité puisque ne nécessitant que peu de raccords hydrauliques sur une grande longueur, à savoir plusieurs dizaines de mètres. Le raccordement des nappes de tubes peut s'effectuer par des joints à compression standard. L'encombrement à l'intérieur des conduites est réduit. Aucun obstacle n'est créé sur le trajet de l'effluent, en particulier de l'eau usée.

Une réparation sur site peut s'effectuer en ne nécessitant que peu de moyens de manutention et d'outillage. En cas de rupture accidentelle, une réparation rapide peut être effectuée par manchon et plastron.

Des panneaux tubulaires souples de grande longueur peuvent être introduits par un orifice restreint, notamment un trou d'homme.

Le risque de corrosion des matériaux synthétiques, ou de l'enrobage minéral ou de la résine composite, est faible.

L'invention peut s'appliquer à la récupération de la chaleur de fluides chargés et/ou corrosifs, abrasifs, notamment dans les réseaux d'assainissement urbain.

L'invention peut également être mise en oeuvre dans les stations d'épuration (STEP) entre l'amont et l'aval de digesteurs, car le dispositif est réversible et peut transmettre de la chaleur à un effluent qui doit être réchauffé avant un traitement.

L'invention peut être appliquée à toute utilité résidentielle, tertiaire, industrielle qui évacue un effluent ou des effluents chauds : piscines, écoles, universités, bâtiments administratifs, industries alimentaires, chimiques, pétrochimiques.

L'étanchéité de l'installation peut être contrôlée par mise en pression à l'air comprimé et maintien de la pression.

L'équilibrage du débit dans chaque tube 3 peut être réalisé à l'aide de diaphragmes calibrés. En cas de fuite accidentelle d'un tube, on peut pratiquer un bouchonnage de ce tube pour le mettre hors circuit.

## Revendications

1. Procédé pour extraire de la chaleur d'un effluent (1) circulant dans une conduite (2), notamment un collecteur d'eaux usées, selon lequel on installe, au moins dans le fond de la conduite, un échangeur de chaleur (E) qui baigne dans l'effluent, l'échangeur de chaleur (E) est formé par enrobage de tubes (3) avec un matériau (4) suffisamment conducteur de la chaleur coulé autour des tubes, et propre à durcir in situ, les tubes étant destinés à la circulation d'un fluide caloporteur, l'échange calorifique avec l'effluent de la conduite s'effectuant au travers de l'enrobage moulé, la surface supérieure du matériau coulé venant directement au contact de l'effluent circulant dans la conduite **caractérisé en ce que** l'enrobage est réalisé selon plusieurs couches de matériaux de propriétés différentes, à savoir :
- une couche (9) de matériau thermiquement isolant entre les tubes (3) et la paroi de la conduite (2),
- une couche (10) de matériau thermiquement conducteur au contact des tubes, entre les tubes et l'effluent,
- et, en surface, au contact de l'effluent une couche (11) de matériau résistant à l'abrasion.

2. Procédé selon la revendication 1, **caractérisé en ce que**, après avoir dévié ou arrêté momentanément l'écoulement d'effluent de la conduite, on réalise l'échangeur (E) directement à l'intérieur de la conduite,
- en disposant, dans le fond de la conduite, des tubes pour un circuit de fluide caloporteur,
- et en coulant en place le matériau d'enrobage pour y noyer les tubes, le matériau épousant le profil de la partie inférieure de la conduite.

3. Procédé selon l'une quelconque des revendications précédentes, **caractérisé en ce que** le matériau d'enrobage (4) est constitué par au moins l'un des matériaux suivants : résine synthétique, ciment ou béton thermiquement conducteur, matériau composite éventuellement chargé d'ajouts ou d'adjuvants thermiquement conducteurs.

4. Procédé selon l'une quelconque des revendications précédentes, **caractérisé en ce que** l'on insère un film de protection (7) entre la surface intérieure de la conduite (2) et l'échangeur (E) intégré dans cette conduite.

5. Procédé selon l'une quelconque des revendications précédentes, **caractérisé en ce que** les tubes (3) sont disposés parallèles à la direction longitudinale de la conduite (2).

6. Procédé selon la revendication 5, **caractérisé en ce que** les tubes (3), avant coulage du matériau d'enrobage, sont maintenus parallèles et espacés par un râtelier (6). Ou une résille rapportée et collée en atelier.

7. Procédé selon l'une quelconque des revendications précédentes, **caractérisé en ce qu'**une résille intermédiaire (8), métallique ou en fibres synthétiques, est déployée avant coulage du matériau d'enrobage sur au moins une partie d'une nappe de tubes (3) afin de renforcer la résistance mécanique et/ou améliorer le transfert thermique.

8. Procédé selon l'une quelconque des revendications précédentes, **caractérisé en ce que** les tubes (3) sont souples ou semi-rigides pour pouvoir être enroulés et déroulés en continu suivant une longueur importante, notamment de plusieurs dizaines de mètres

9. Procédé selon la revendication 8, **caractérisé en ce que** les tubes (3) sont en matériau métallique souple ou en matériau synthétique (polypropylène, plastique)

10. Procédé selon l'une quelconque des revendications précédentes, **caractérisé en ce que** l'on réalise par préfabrication des nappes de tubes souples et qu'on les enroule sur des supports en forme de bobines pour la mise en place ultérieure dans la conduite d'effluent, par déroulement à partir de la bobine.

11. Procédé selon l'une quelconque des revendications précédentes, **caractérisé en ce que** l'on dispose des tubes (3) pour fluide caloporteur suivant le contour complet de la section transversale de la conduite, et qu'un enrobage des tubes est réalisé sur tout le contour de la section de la conduite.

12. Procédé selon l'une quelconque des revendications précédentes, **caractérisé en ce que** la surface intérieure (5) du matériau moulé est horizontale.

13. Echangeur pour extraire de la chaleur à partir d'un effluent circulant dans une conduite, notamment un collecteur d'eaux usées, prévu pour être installé au moins dans le fond de la conduite et pour baigner dans l'effluent, l'échangeur étant constitué de tubes (3) noyés dans un matériau (4) suffisamment conducteur de la chaleur coulé autour des tubes, et propre à durcir in situ, lesdits tubes étant destinés à la circulation d'un fluide caloporteur,
l'échange calorifique avec l'effluent de la conduite s'effectuant au travers de l'enrobage moulé, la surface supérieure du matériau coulé venant directement au contact de l'effluent circulant dans la conduite,
**caractérisé en ce que** ledit enrobage est réalisé selon plusieurs couches de matériaux de propriétés différentes, à savoir :
- une couche (9) de matériau thermiquement isolant entre les tubes (3) et la paroi de la conduite (2),
- une couche (10) de matériau thermiquement conducteur au contact des tubes, entre les tubes et l'effluent,
- et, en surface, au contact de l'effluent une couche (11) de matériau résistant à l'abrasion.

14. Installation pour extraire de la chaleur dans une conduite d'effluent, notamment dans un collecteur d'eaux usées, **caractérisée en ce qu'**elle comporte dans le fond, baignant dans l'effluent, au moins un échangeur de chaleur (E) réalisé selon la revendication 13.

15. Installation selon la revendication 14, **caractérisée en ce qu'**elle comporte sur les zones de la paroi interne de la conduite situées au-dessus de l'effluent des canalisations (14) exposées à l'atmosphère régnant dans la conduite, parcourues par un fluide caloporteur pour récupérer une partie de la chaleur sensible et de la chaleur latente de condensation de la vapeur d'eau.

## Patentansprüche

1. Verfahren zur Auskopplung der Wärme eines Abstroms (1), der in einer Leitung (2), insbesondere einer Abwassersammelleitung, zirkuliert, durch Installieren eines Wärmetauschers (E), der in den Abstrom eingetaucht ist, wenigstens am unteren Ende der Leitung, wobei der Wärmetauscher (E) durch Ummantelung von Rohren (3) mit einem ausreichend wärmeleitfähigen Material (4) gebildet wird, das um die Rohre herum gegossen wird und in situ aushärten kann, wobei die Rohre für die Zirkulation einer Wärmeträgerflüssigkeit bestimmt sind, wobei der Wärmeaustausch mit dem Abstrom der Leitung durch die geformte Ummantelung hindurch erfolgt, wobei die obere Oberfläche des gegossenen Materials direkt in Kontakt mit dem in der Leitung zirkulierenden Abstrom kommt;
**dadurch gekennzeichnet, dass** die Ummantelung gemäß mehreren Schichten aus Materialien unterschiedlicher Eigenschaften erfolgt, und zwar:
- eine Schicht (9) aus thermisch isolierendem Material zwischen den Rohren (3) und der Wand der Leitung (2);
- eine Schicht (10) aus thermisch leitendem Material, die mit den Rohren in Kontakt ist, zwischen den Rohren und dem Abstrom;
- und eine Schicht (11) aus abriebfestem Material an der Oberfläche in Kontakt mit dem Abstrom.

2. Verfahren gemäß Anspruch 1, **dadurch gekennzeichnet, dass** man, nachdem der Fluss des Abstroms der Leitung vorübergehend umgeleitet oder angehalten wurde, den Tauscher (E) direkt im Innern der Leitung realisiert;
- indem man im unteren Teil der Leitung Rohre für einen Wärmeträgerflüssigkeitskreislauf bereitstellt;
- und indem man das Ummantelungsmaterial an Ort und Stelle vergießt, um die Rohre darin zu versenken, wobei das Material an das Profil des unteren Teils der Leitung angepasst ist.

3. Verfahren gemäß einem der vorstehenden Ansprüche, **dadurch gekennzeichnet, dass** das Ummantelungsmaterial (4) aus wenigstens einem der folgenden Materialien besteht: Kunstharz, wärmeleitender Zement oder Beton, Verbundmaterial, das gegebenenfalls mit wärmeleitenden Zusätzen oder Hilfsmitteln versehen ist.

4. Verfahren gemäß einem der vorstehenden Ansprüche, **dadurch gekennzeichnet, dass** eine Schutzfolie (7) zwischen der Innenfläche der Leitung (2) und dem in diese Leitung integrierten Tauscher (E) eingefügt ist.

5. Verfahren gemäß einem der vorstehenden Ansprüche, **dadurch gekennzeichnet, dass** die Rohre (3) parallel zur Längsrichtung der Leitung (2) angeordnet sind.

6. Verfahren gemäß Anspruch 5, **dadurch gekennzeichnet, dass** die Rohre (3) vor dem Vergießen des Ummantelungsmaterials durch ein Gestell (6) oder ein in der Werkstatt aufgesetztes und angeklebtes Gitter parallel und auf Abstand gehalten werden.

7. Verfahren gemäß einem der vorstehenden Ansprüche, **dadurch gekennzeichnet, dass** vor dem Vergießen des Ummantelungsmaterials ein Zwischengitter (8) aus Metall oder synthetischen Fasern auf wenigstens einem Teil einer Fläche bestehend aus Rohren (3) ausgebreitet wird, um die mechanische Festigkeit zu verstärken und/oder die Termischedurchleitung zu verbessern.

8. Verfahren gemäß einem der vorstehenden Ansprüche, **dadurch gekennzeichnet, dass** die Rohre (3) biegsam oder halbstarr sind, damit sie über eine große Länge, insbesondere über mehrere Dutzend Meter, kontinuierlich aufgerollt und entrollt werden können.

9. Verfahren gemäß Anspruch 8, **dadurch gekennzeichnet, dass** die Rohre (3) aus einem biegsamen Metallmaterial oder aus einem synthetischen Material (Polypropylen, Plastik) bestehen.

10. Verfahren gemäß einem der vorstehenden Ansprüche, **dadurch gekennzeichnet, dass** man biegsame Fläche bestehend aus Rohren vorfabriziert und man sie auf Trägern in Form von Spulen aufrollt, um sie später in der Abstromleitung zu platzieren, indem man sie von der Spule abrollt.

11. Verfahren gemäß einem der vorstehenden Ansprüche, **dadurch gekennzeichnet, dass** man Rohre (3) für eine Wärmeträgerflüssigkeit bereitstellt, die dem vollständigen Umriss des Querschnitts der Leitung folgen, und dass eine Ummantelung der Rohre auf dem gesamten Umriss des Querschnitts der Leitung erfolgt.

12. Verfahren gemäß einem der vorstehenden Ansprüche, **dadurch gekennzeichnet, dass** die Innenfläche (5) des geformten Materials horizontal ist.

13. Tauscher zur Auskopplung der Wärme eines Abstroms, der in einer Leitung, insbesondere einer Abwassersammelleitung, zirkuliert, der für die Montage wenigstens im unteren Teil der Leitung und zum Eintauchen in den Abstrom vorgesehen ist, wobei der Tauscher aus Rohren (3) besteht, die in ein ausreichend wärmeleitfähiges Material (4) eingebettet sind, das um die Rohre herum gegossen ist und in situ aushärten kann, wobei die Rohre für die Zirkulation einer Wärmeträgerflüssigkeit bestimmt sind, wobei der Wärmeaustausch mit dem Abstrom der Leitung durch die geformte Ummantelung hindurch erfolgt, wobei die obere Oberfläche des gegossenen Materials direkt in Kontakt mit dem in der Leitung zirkulierenden Abstrom kommt;
**dadurch gekennzeichnet, dass** die Ummantelung gemäß mehreren Schichten aus Materialien unterschiedlicher Eigenschaften erfolgt, und zwar:
- eine Schicht (9) aus thermisch isolierendem Material zwischen den Rohren (3) und der Wand der Leitung (2);
- eine Schicht (10) aus thermisch leitendem Material, die mit den Rohren in Kontakt ist, zwischen den Rohren und dem Abstrom;
- und eine Schicht (11) aus abriebfestem Material an der Oberfläche in Kontakt mit dem Abstrom.

14. Anlage zur Auskopplung der Wärme aus einer Abstromleitung, insbesondere aus einer Abwassersammelleitung, **dadurch gekennzeichnet, dass** sie im unteren Teil wenigstens einen Wärmetauscher (E), der in den Abstrom eingetaucht ist und gemäß Anspruch 13 hergestellt ist, umfasst.

15. Anlage gemäß Anspruch 14, **dadurch gekennzeichnet, dass** sie auf den Zonen der Innenwand der Leitung, die sich über dem Abstrom befinden, Kanäle (14) umfasst, die zur Atmosphäre, welche in der Leitung, die von einer Wärmeträgerflüssigkeit umflossen wird, herrscht, exponiert sind, um einen Teil der fühlbaren Wärme und der latenten Kondensationswärme des Wasserdampfs zurückzugewinnen.

## Claims

1. A method for extracting heat from an effluent (1) flowing in a duct (2), notably a main sewer, according to which a heat exchanger (E) is installed at least in the bottom of the duct, which heat exchanger is immersed in the effluent, the heat exchanger (E) is formed by coating of tubes (3) with a sufficiently heat-conducting material (4) poured around the tubes, and suitable for hardening in situ, the tubes being designed for the flow of a heat-transferring fluid, the exchange of heat with the effluent of the duct taking place through the molded coating, the top surface of the poured material coming into direct contact with the effluent flowing in the duct, **characterized in that** the coating is carried out in several layers of materials with different properties, namely:
- a layer (9) of thermally insulating material between the tubes (3) and the wall of the duct (2),
- a layer (10) of thermally conducting material in contact with the tubes, between the tubes and the effluent,
- and, on the surface, in contact with the effluent, a layer (11) of abrasion-resistant material.

2. The method as claimed in claim 1, **characterized in that**, after having diverted or temporarily stopped the flow of effluent in the pipe, the exchanger (E) is implemented directly inside the duct,
- by depositing, in the bottom of the duct, tubes for a circuit of heat-transferring fluid,
- and by pouring in place the coating material in order to immerse the tubes therein, the material closely matching the profile of the bottom portion of the duct.

3. The method as claimed in either one of the preceding claims, **characterized in that** the coating material (4) consists of at least one of the following materials: synthetic resin, thermally conductive cement or concrete, composite material optionally laden with thermally conductive additions or additives.

4. The method as claimed in any one of the preceding claims, **characterized in that** a protective film (7) is inserted between the inner surface of the duct (2) and the exchanger (E) incorporated into this duct.

5. The method as claimed in any one of the preceding claims, **characterized in that** the tubes (3) are placed parallel to the longitudinal direction of the duct (2).

6. The method as claimed in claim 5, **characterized in that** the tubes (3), before pouring of the coating material, are kept parallel and spaced apart by a rack (6). Or a webbing fitted and bonded at the factory.

7. The method as claimed in any one of the preceding claims, **characterized in that** an intermediate webbing (8), made of metal or of synthetic fibers, is deployed before pouring of the coating material over at least a portion of a cluster of tubes (3) in order to enhance the mechanical strength and/or improve the thermal transfer.

8. The method as claimed in any one of the preceding claims, **characterized in that** the tubes (3) are flexible or semi-rigid in order to be able to be rolled up and unrolled continuously over a considerable length, notably of several tens of meters.

9. The method as claimed in claim 8, **characterized in that** the tubes (3) are made of flexible metal material or of synthetic material (polypropylene, plastic).

10. The method as claimed in any one of the preceding claims, **characterized in that** clusters of flexible tubes are prefabricated and that they are rolled up on reel-shaped supports for subsequent placement in the effluent duct by unrolling from the reel.

11. The method as claimed in any one of the preceding claims, **characterized in that** tubes (3) for heat-transferring fluid are placed along the complete contour of the cross section of the duct, and that coating of the tubes is carried out over the whole contour of the section of the duct.

12. The method as claimed in any one of the preceding claims, **characterized in that** the internal surface (5) of the molded material is horizontal.

13. An exchanger for extracting heat from an effluent flowing in a duct, notably a main sewer, designed to be installed at least in the bottom of the duct and to be immersed in the effluent, the exchanger consisting of tubes (3) embedded in a sufficiently heat-conducting material (4) poured around the tubes and suitable for hardening in situ, said tubes being intended for the flow of a heat-transferring fluid,
the exchange of heat with the effluent of the duct taking place through the molded coating, the upper surface of the poured material coming directly into contact with the effluent flowing in the duct,
**characterized in that** carried out in several layers of material of different properties, namely:
- one layer (9) of a thermally insulating material between the tubes (3) and the wall of the duct (2),
- one layer of a thermally conductive material (10) in contact with the tubes, between the tubes and the effluent, and
- on the surface, a layer (11) of erosion-resistant material.

14. An installation for extracting heat in an effluent duct, notably in a main sewer, **characterized in that** it comprises in the bottom, immersed in the effluent, at least one heat exchanger (E) made according to the claim 13.

15. The installation as claimed in claim 14, **characterized in that** it comprises, in the areas of the internal wall of the duct that are situated above the effluent, pipes (14) exposed to the atmosphere prevailing in the duct, through which pipes a heat-transferring fluid travels in order to recover a portion of the noticeable heat and of the latent heat from condensation of the water vapor.
